Europäisches Patentamt

European Patent Office

Office européen des brevets ,

(11) Veröffentlichungsnummer : **0 084 371**
**B1**

(12) **EUROPÄISCHE PATENTSCHRIFT**

(45) Veröffentlichungstag der Patentschrift :
07.05.86

(21) Anmeldenummer : **83100357.9**

(22) Anmeldetag : **17.01.83**

(51) Int. Cl.⁴ : **H 04 B 17/02**, H 04 B 9/00

(54) **Trägerfrequenzsystem für Vierdrahtbetrieb.**

(30) Priorität : **19.01.82 DE 3201375**

(43) Veröffentlichungstag der Anmeldung :
**27.07.83 Patentblatt 83/30**

(45) Bekanntmachung des Hinweises auf die Patenterteilung : **07.05.86 Patentblatt 86/19**

(84) Benannte Vertragsstaaten :
**AT BE CH DE FR GB IT LI LU NL SE**

(56) Entgegenhaltungen :
EP-A- 0 058 764
AU-B-     45 168
DE-A- 2 454 494
GB-A- 2 012 949
GB-A- 2 051 355
US-A- 4 184 056
NATIONAL TELECOMMUNICATIONS CONFERENCE,
New Orleans, 29.11.-3.12.1981, Band 1 von 4, IEEE
Katalog Nr. 81CH1679-0, Seiten A1.4.1-A1.4.5, New
York, USA D.J. PETERSON et al.: "A 90 MHz fiber
optic repeater with regeneration and remote control"

(73) Patentinhaber : **Siemens Aktiengesellschaft**
**Berlin und München Wittelsbacherplatz 2**
**D-8000 München 2 (DE)**

(72) Erfinder : **Anders, Alois, Dipl.-Ing.**
**Balanstrasse 187**
**D-8000 München 90 (DE)**

**Beschreibung**

Die Erfindung bezieht sich auf ein Nachrichtenübertragungssystem für Trägerfrequenzsignale und Vierdrahtbetrieb mit Endstellen, die einen Sendeteil und einen Empfangsteil enthalten, mit Zwischenstellen, die eine Verstärkereinrichtung für die eine Übertragungsrichtung und eine Verstärkereinrichtung für die andere Übertragungsrichtung enthalten, und mit einem Übertragungsmedium.

Ein derartiges Nachrichtenübertragungssystem ist beispielsweise aus der « Siemens-Zeitschrift », 48 (1974), Beiheft Nachrichten-Übertragungstechnik, Seiten 87 bis 89, bekannt.

Aus der Zeitschrift « telcom report », 2 (1979) Beiheft Digital-Übertragungstechnik, Seiten 111 bis 117, insbesondere Bild 1, ist ein weiteres Nachrichtenübertragungssystem für Vierdrahtbetrieb über Lichtwellenleiter bekannt. Bei diesem System lassen sich eventuelle Fehler in den Lichtwellenleitern oder in den Zwischenstellen mit Hilfe eines Ortungsgerätes lokalisieren, das im Falle der Fehlerortung an das Leitungsendgerät angeschaltet wird. Das Ortungsgerät speist dazu ein Ortungssignal in das Übertragungssystem ein, mit dessen Hilfe nacheinander im Leitungsendgerät und in den Zwischenstellen ein Schleifenschluß geschaltet wird, so daß das gesendete Ortungssignal zum Ortungsgerät zurückgelangt. Eine Auswertung dieses Signales gibt über die Funktionstüchtigkeit der in der Schleife betriebenen Einrichtungen Auskunft. Durch schrittweises Weiterschalten des Schleifenschlusses ist eine Fehlerlokalisierung möglich.

Ein älterer Vorschlag entsprechend der EP-AZ-0 058 764, veröffentlicht am 01.09.1982, geht dahin, die trägerfrequenten Signale vor der Übertragung über Lichtwellenleiter in der Frequenz zu modulieren.

Aus der Zeitschrift « telcom report », 2 (1979) 6, Seiten 424 bis 427, insbesondere Bild 4, ist schließlich ein Trägerfrequenzsystem Z60 für Zweidraht-Getrenntlagebetrieb bekannt, in dessen Zwischenstellen jeweils ein Ortungsgenerator individueller Frequenz vorgesehen ist. Das Ortungssignal durchläuft in jeder Zwischenstelle zuerst den Empfangsweg des unteren Bandes und dann in Gegenrichtung den Empfangsweg des oberen Bandes, so daß das Auftreten der einzelnen Ortungsfrequenzen von einer Endstelle her überprüft werden kann.

Aufgabe der Erfindung ist es, ein Trägerfrequenzsystem für Vierdrahtbetrieb mit Lichtwellenleitern auszurüsten und dabei eine Möglichkeit zur zusätzlichen Übertragung eines schmalen Spektrums analoger Signale, insbesondere für eine Fehlerortung, anzugeben, bei der sich Fehler auf einzelne Übertragungsabschnitte eingrenzen lassen.

Ausgehend von einem Nachrichtenübertragungssystem der einleitend geschilderten Art wird diese Aufgabe erfindungsgemäß dadurch gelöst, daß im Sendeteil eine Kettenschaltung aus einem Frequenzmodulator für die trägerfrequenten Signale, aus einem Begrenzer, aus einer zweiten Anpassungsschaltung und aus einem elektrooptischen Umsetzer vorgesehen ist, daß im elektrooptischen Umsetzer ein zweiter Eingang für ein unterhalb dem Band der frequenzmodulierten trägerfrequenten Signale liegendes analoges Zusatzsignal vorgesehen ist, daß im Empfangsteil eine Kettenschaltung aus einem optoelektrischen Umsetzer, aus einer ersten Anpassungsschaltung, aus einem Begrenzer und aus einem Frequenzdemodulator vorgesehen ist, daß in der ersten Anpassungsschaltung ein zweiter Ausgang für die Zusatzsignale vorgesehen ist, dem ein Filter zur Sperrung des Bandes der frequenzmodulierten trägerfrequenten Signale nachgeschaltet ist, daß in den Zwischenstellen in jeder Übertragungsrichtung als Verstärkereinrichtung eine Kettenschaltung aus einem optoelektrischen Umsetzer, aus einer ersten Anpassungsschaltung, aus einem Begrenzer, aus einer zweiten Anpassungsschaltung und aus einem elektrooptischen Umsetzer vorgesehen ist, daß in den Zwischenstellen zwischen dem zweiten Ausgang der ersten Anpassungsschaltung und dem zweiten Ausgang der zweiten Anpassungsschaltung in beiden Übertragungsrichtungen ein erster Übertragungsweg nur für Zusatzsignale vorgesehen ist bzw. daß in den Zwischenstellen zwischen dem zweiten Ausgang der ersten Anpassungsschaltung in der ersten Übertragungsrichtung und dem zweiten Eingang der zweiten Anpassungsschaltung in der zweiten Übertragungsrichtung ein zweiter Übertragungsweg nur für Zusatzsignale vorgesehen ist, daß in jeder Zwischenstelle je ein Generator für ein zwischenstellenindividuelles Zusatzsignal mit dem zweiten Eingang jeder zweiten Anpassungsschaltung verbunden ist bzw. daß in jeder Zwischenstelle ein Generator für ein zwischenstellenindividuelles Zusatzsignal mit dem zweiten Eingang der zweiten Anpassungsschaltung der Übertragungsrichtung verbunden ist, von der der zweite Übertragungsweg für Zusatzsignale ausgeht, und daß als Übertragungsmedium Lichtwellenleiter vorgesehen sind.

Vorteilhaft ist es dabei, wenn für die frequenzmodulierten Trägerfrequenzsignale ein oberes Frequenzband insbesondere von 2 bis 20 MHz und für die Zusatzsignale ein unteres nicht frequenzmoduliertes Frequenzband, insbesondere von 0,3 bis ca 160 kHz gewählt ist. Im unteren Frequenzband kann dabei unten wenigstens ein Dienstkanal und können oben Ortungsfrequenzen vorgesehen sein.

Sowohl eine Übertragung von Dienstkanälen als auch von Ortungsfrequenzen ist möglich, wenn in den Zwischenstellen eine Übertragung der Dienstkanäle in jeder Übertragungsrichtung über den ersten Übertragungsweg und eine Übertragung jeweils eines Ortungssignals über den zweiten Übertragungsweg vorgesehen ist.

Dem zweiten Eingang der zweiten Anpassungsschaltung eines Sendeteils, dem ein Ortungssignal zugeführt wird, kann in vorteilhafter Weise eine erste Gabel oder ein zusammenfassender Verstärker mit je zwei Eingängen vorgeschaltet sein und kann dem einen Eingang der wenigstens eine Dienstkanal und dem anderen Eingang das Ortungssignal zugeführt werden.

Dem zweiten Ausgang der ersten Anpassungsschaltung im Empfangsteil, dem Ortungssignale entnommen werden, kann vorteilhafterweise eine zweite Gabel mit nachgeschalteten Filtern oder eine Frequenzweiche oder ein trennender Verstärker mit zwei Ausgängen nachgeschaltet sein und kann dem einen Ausgang der wenigstens eine Dienstkanal und dem anderen Ausgang die Ortungssignale entnommen werden.

Vorteilhaft ist es auch, wenn der Ausgang des Ortungsfrequenzgenerators über eine Gabel mit dem zweiten Ausgang der zweiten Anpassungsschaltung verbunden ist.

Vorteilhaft ist es außerdem, wenn im ersten und zweiten Übertragungsweg für die Zusatzsignale ein die frequenzmodulierten trägerfrequenten Signale sperrendes Filter vorgesehen ist.

Vorteilhaft ist es schließlich, wenn als Gabel für den ersten und den zweiten Übertragungsweg ein trennender Verstärker vorgesehen ist.

Anhand von Ausführungsbeispielen wird die Erfindung nachstehend näher beschrieben.

Figur 1 zeigt die Grundkonzeption des Übertragungssystems

Figur 2 und Figur 3 zeigen eine erste Variante des erfindungsgemäßen Nachrichtenübertragungssystems und

Figur 4 und Figur 5 zeigen eine zweite Variante des erfindungsgemäßen Nachrichtenübertragungssystems.

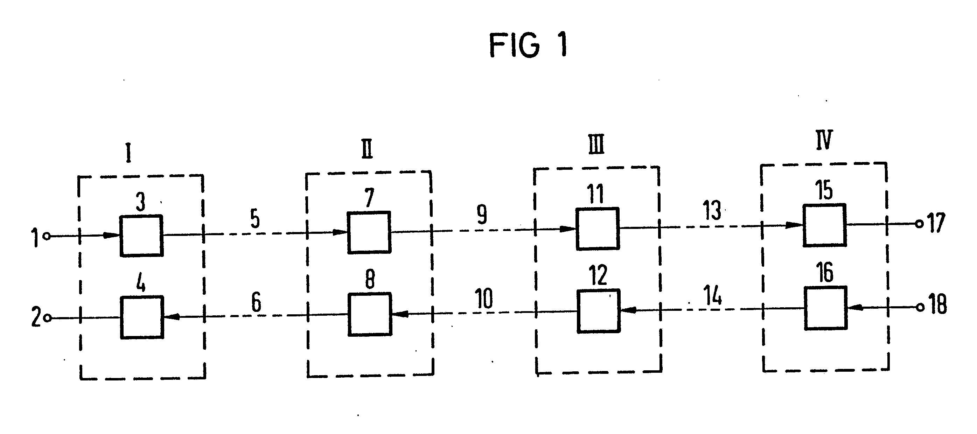

Die Fig. 1 zeigt ein Nachrichtenübertragungssystem für trägerfrequente Signale und Zweidrahtbetrieb. Das System enthält Endstellen I und IV sowie Zwischenstellen II und III. Die Endstellen I und IV enthalten Sendeteile 3 und 16 und Empfangsteile 4 und 15. Mit 1 und 18 sind die Eingänge und mit 2 und 17 die Ausgänge des Trägerfrequenzsystems bezeichnet. Die Zwischenstellen II und III enthalten Verstärkereinrichtungen 7, 8, 11, 12. Mit 5, 6, 9, 10, 13, 14 sind Lichtwellenleiter bezeichnet. Das Übertragungssystem kann trägerfrequente Signale vom Eingang 1 zum Ausgang 17 und von Eingang 18 zum Ausgang 2 übertragen.

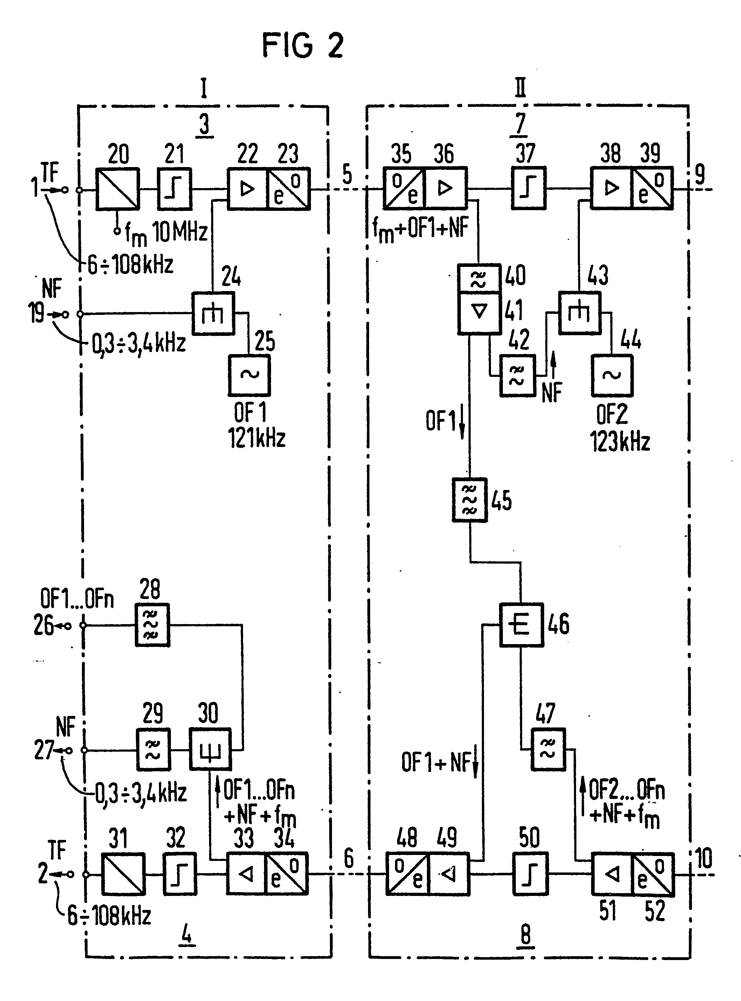

Fig. 2 zeigt eine Endstelle I und eine erste Zwischenstelle II eines erfindungsgemäßen Trägerfrequenzsystems. Die Endstelle I enthält im Sendeteil 3 einen Frequenzmodulator 20, einen Begrenzer 21, eine zweite Anpassungsschaltung 22, einen elektrooptischen Umsetzer 23, eine Gabel 24, einen Niederfrequenzeingang 19 und einen Ortungssignalgenerator 25, der eine erste Ortungsfrequenz OF1 von z. B. 121 kHz abgibt. Der Empfangsteil 4 enthält einen optoelektrischen Umsetzer 34, eine erste Anpassungsschaltung 33, einen Begrenzer 32, einen Frequenzdemodulator 31, eine Gabel 30, ein Tiefpaßfilter 29, das niederfrequente Dienstkanäle durchläßt, und ein Bandpaßfilter 28, das Ortungsfrequenzen durchläßt.

Die erste Zwischenstelle II enthält eine erste Verstärkereinrichtung 7 mit einem optoelektrischen Umsetzer 35, mit einer ersten Anpassungsschaltung 36, mit einem Begrenzer 37, mit einer zweiten Anpassungsschaltung 38, mit einem elektrooptischen Umsetzer 39, mit einem Tiefpaßfilter 40, das die erste Ortungsfrequenz und die niederfrequenten Dienstkanäle durchläßt, mit einem trennenden Verstärker 41, mit einem Tiefpaßfilter 42, das niederfrequente Dienstkanäle durchläßt, mit einer Gabel 43 und mit einem Ortungsfrequenzgenerator 44, der eine zweite Ortungsfrequenz OF2 von z. B. 123 kHz abgibt. Die zweite Verstärkereinrichtung 8 enthält einen optoelektrischen Umsetzer 52, eine erste Anpassungsschaltung 51, einen Begrenzer 50, eine zweite Anpassungsschaltung 49, einen elektrooptischen Umsetzer 48, ein Tiefpaßfilter 47, das die niederfrequenten Dienstkanäle und die Ortungsfrequenzen durchläßt, und eine Gabel 46. Die Zwischenstelle II enthält weiter ein Bandpaßfilter 45, das die erste Ortungsfrequenz OF1 passieren läßt.

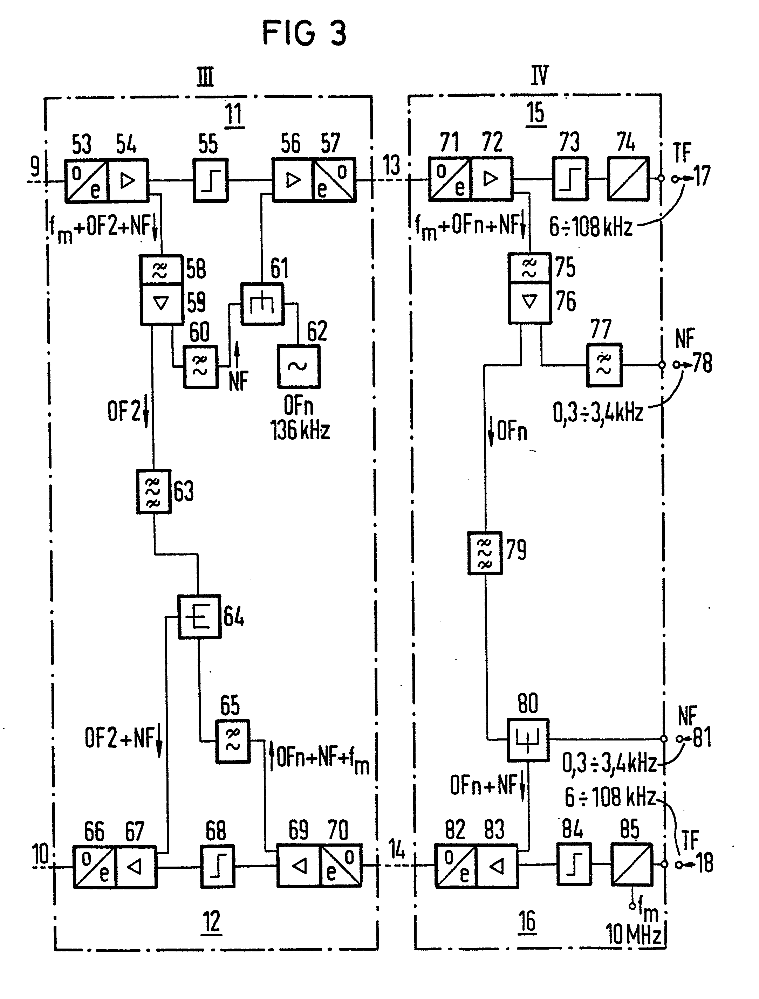

Fig. 3 enthält eine zweite Zwischenstelle III und eine zweite Endstelle IV. Die zweite Zwischenstelle III enthält eine erste Verstärkereinrichtung 11 mit einem optoelektrischen Umsetzer 53, mit einer ersten Anpassungsschaltung 54, mit einem Begrenzer 55, mit einer zweiten Anpassungsschaltung 56, mit einem elektrooptischen Umsetzer 57, mit einem Tiefpaßfilter 58, das die zweite Ortungsfrequenz OF2 und die niederfrequenten Dienstkanäle durchläßt, mit einem trennenden Verstärker 59, mit einem Tiefpaßfilter 60, das die niederfrequenten Dienstkanäle durchläßt, mit einer Gabel 61 und mit einem Ortungsfrequenzgenerator 62, der eine Ortungsfrequenz OFn von z. B. 136 kHz abgibt. Die zweite Verstärkereinrichtung 12 enthält einen optoelektrischen Umsetzer 70, eine erste Anpassungsschaltung 69, einen Begrenzer 68, eine zweite Anpassungsschaltung 67, einen elektrooptischen Umsetzer 66, ein Tiefpaßfilter 65, das Ortungsfrequenzen und niederfrequente Dienstkanäle durchläßt, und eine Gabel 64. Die Zwischenstelle III enthält weiter ein Bandpaßfilter 63, in dessen Durchlaßbereich die zweite Ortungsfrequenz OF2 fällt.

Die zweite Endstelle IV enthält einen Empfangsteil 15 mit einem optoelektrischen Umsetzer 71, mit einer ersten Anpassungsschaltung 72, mit einem Begrenzer 73, mit einem Frequenzdemodulator 74, mit einem Tiefpaßfilter 75, das die Ortungsfrequenz OFn und die niederfrequenten Dienstkanäle durchläßt, mit einem trennenden Verstärker 76, mit einem Tiefpaßfilter 77, das die niederfrequenten Dienstkanäle durchläßt, und mit einem Ausgang 78 für die niederfrequenten Dienstkanäle. Der Sendeteil 16 enthält einen elektrooptischen Umsetzer 82, eine zweite Anpassungsschaltung 83, einen Begrenzer 84, einen Frequenzmodulator 85, eine Gabel 80 und einen Eingang 81 für niederfrequente Dienstkanäle. Die Endstelle IV enthält weiter ein Bandpaßfilter 79, das die Ortungsfrequenz OFn passieren läßt.

Vom Eingang 1 zum Ausgang 17 laufen die trägerfrequenten Signale über die Elemente 20 bis 23, 5, 35 bis 39, 9, 53 bis 57, 13, 71 bis 74. In Gegenrichtung laufen sie vom Eingang 18 über die Elemente 85 bis 82, 14, 70 bis 66, 10, 52 bis 48, 6 und 34 bis 31. Die niederfrequenten Dienstkanäle laufen von ihrem Eingang 19 über die Elemente 24, 22, 23, 5, 35, 36, 40, 41, 42, 43, 38, 39, 9, 53, 54, 58, 59, 60, 61, 56, 57, 13, 71, 72, 75, 76, 77 zum Ausgang 78. In Gegenrichtung laufen sie vom Eingang 81 über die Elemente 80, 83, 82, 14, 70, 69, 65, 64, 67, 66, 10, 52, 51, 47, 46, 49, 48, 6, 34, 33, 30, 29 zum Ausgang 27. Die erste Ortungsfrequenz OF1 läuft vom Ortungsfrequenzgenerator 25 über die Elemente 24, 22, 23, 5, 35, 36, 40, 41, 45, 46, 49, 48, 6, 34, 33, 30 und 28 zum Ausgang 26. Die Ortungsfrequenz OF2 läuft vom Ortungsfrequenzgenerator 44 über die Elemente 43, 38, 39, 9, 53, 54, 58, 59, 63, 64, 67, 66, 10, 52, 51, 47, 46, 49, 48, 6, 34, 33, 30 und 28 zum Ausgang 26. Die Ortungsfrequenz OFn läuft vom Ortungsfrequenzgenerator 62 über die Elemente 61, 56, 57, 13, 71, 72, 75, 76, 79, 80, 83, 82, 14, 70, 69, 65, 64, 67, 66, 10, 52, 51, 47, 46, 49, 48, 6, 34, 33, 30 und 28 ebenfalls zum Ausgang 26. Wenn dort eine oder mehrere Ortungsfrequenzen nicht erscheinen, läßt sich der Abschnitt ermitteln, in dem ein Fehler liegt. Außer Dienstgesprächen und Ortungssignalen ist auch eine Übertragung von Fernwirk- und Überwachungssignalen von Interesse.

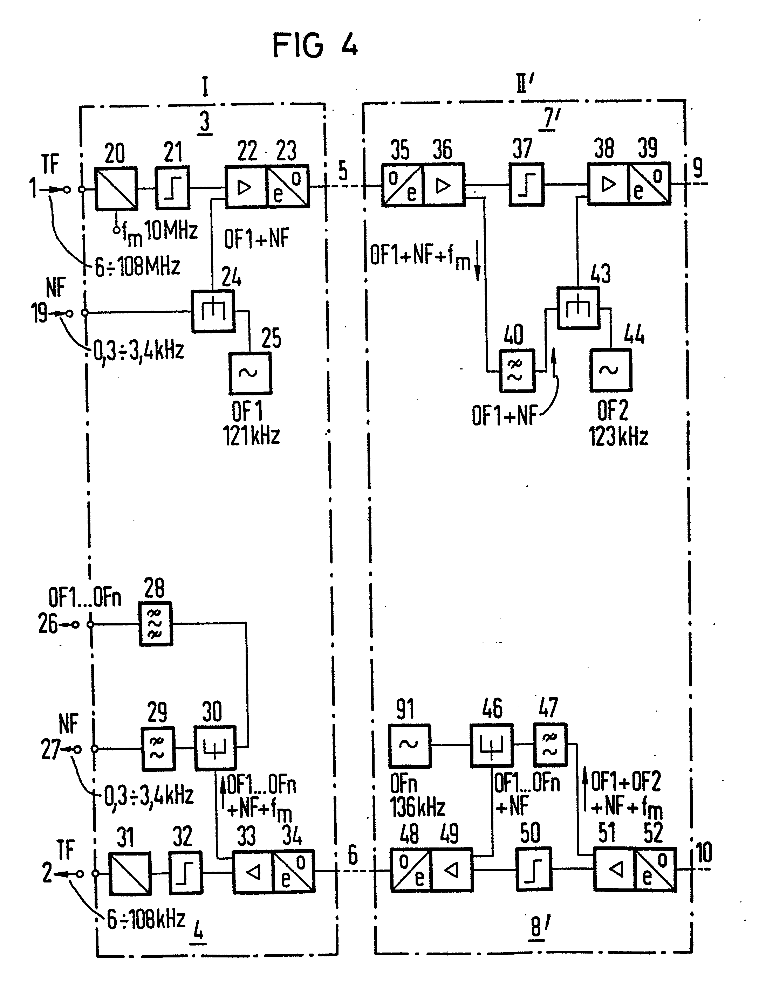

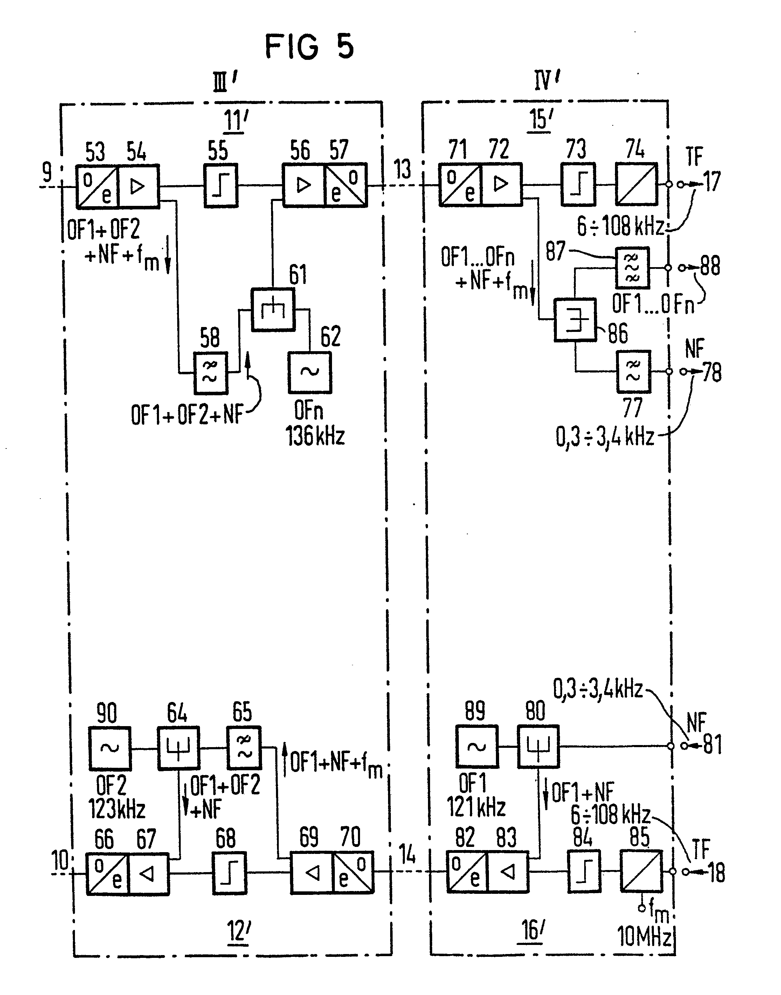

Das Übertragungssystem nach den Figuren 4 und 5 unterscheidet sich von dem nach den Figuren 2 und 3 dadurch, daß keine Schleifen vorhanden sind. Dafür muß in jeder Übertragungsrichtung eine eigene Fehlerortung vorgesehen sein.

Die Übertragung der trägerfrequenten Signale vom Eingang 1 zum Ausgang 17 erfolgt wie bereits anhand der Figuren 2 und 3 beschrieben. Im Übertragungsweg der niederfrequenten Dienstkanäle vom Eingang 19 zum Ausgang 78 fehlen in den Zwischenstellen die trennenden Verstärker 41, 59 und 76 sowie die Tiefpaßfilter 42 und 60. In der Endstelle IV' tritt an die Stelle des Tiefpaßfilters 75 und des trennenden Verstärkers 76 eine Gabel 86. Die Ortungsfrequenzen der Ortungsfrequenzgeneratoren 25, 44 und 62 werden alle zum Empfangsteil 15' übertragen und gelangen von der Gabel 86 über ein Bandpaßfilter 87 zu einem Ausgang 88. Die Gegenrichtung ist entsprechend aufgebaut.

## Patentansprüche

1. Nachrichtenübertragungssystem für Trägerfrequenzsignale und Vierdrahtbetrieb mit Endstellen (I, IV ; I, IV'), die einen Sendeteil (3, 16 ; 3, 16') und einen Empfangsteil (4, 15 ; 4, 15') enthalten, mit Zwischenstellen (II, III ; II', III'), die eine Verstärkereinrichtung (7, 11 ; 7', 11') für die eine Übertragungsrichtung und eine Verstärkereinrichtung (8, 12 ; 8', 12') für die andere Übertragungsrichtung enthalten, und mit einem Übertragungsmedium (5, 6, 9, 10, 13, 14), dadurch gekennzeichnet, daß im Sendeteil (3, 16 ; 3, 16') eine Kettenschaltung aus einem Frequenzmodulator (20, 85) für die trägerfrequenten Signale, aus einem Begrenzer (21, 84), aus einer zweiten Anpassungsschaltung (22, 83) und aus einem elektrooptischen Umsetzer (23, 82) vorgesehen ist, daß in der zweiten Anpassmasschaltung (22, 83) ein zweiter Eingang für ein unterhalb dem Band der frequenzmodulierten trägerfrequenten Signale liegendes analoges Zusatzsignal vorgesehen ist, daß im Empfangsteil (4, 15 ; 4, 15') eine Kettenschaltung aus einem optoelektrischen Umsetzer (34, 71), aus einer ersten Anpassungsschaltung (33, 72), aus einem Begrenzer (32, 73) und aus einem Frequenzdemodulator (31, 74) vorgesehen ist, daß in der ersten Anpassungsschaltung (33, 72) ein zweiter Ausgang für die Zusatzsignale vorgesehen ist, dem ein Filter (28, 29, 75, 77, 87) zur Sperrung des Bandes der frequenzmodulierten trägerfrequenten Signale nachgeschaltet ist, daß in den Zwischenstellen (II, III, II', III') in jeder Übertragungsrichtung als Verstärkereinrichtung (7, 8, 11, 12 ; 7', 8', 11', 12') eine Kettenschaltung aus einem optoelektrischen Umsetzer (35, 52, 53, 70), aus einer ersten Anpassungsschaltung (36, 51, 54, 69), aus einem Begrenzer (37, 50, 55, 68), aus einer zweiten Anpassungsschaltung (38, 49, 56, 67) und aus einem elektrooptischen Umsetzer (39, 48, 57, 66) vorgesehen ist, daß in den Zwischenstellen (II', III') zwischen dem zweiten Ausgang der ersten Anpassungsschaltung (36, 51, 54, 69) und dem zweiten Ausgang der zweiten Anpassungsschaltung (38, 49, 56, 67) in beiden Übertragungsrichtungen ein erster Übertragungsweg nur für Zusatzsignale vorgesehen ist bzw. daß in den Zwischenstellen (II, III) zwischen dem zweiten Ausgang der ersten Anpassungsschaltung (36, 54) in der ersten Übertragungsrichtung und dem zweiten Eingang der zweiten Anpassungsschaltung (49, 67) in der zweiten Übertragungsrichtung ein zweiter Übertragungsweg nur für Zusatzsignale vorgesehen ist, daß in jeder Zwischenstelle (II', III') je ein Generator (44, 62, 90, 91) für ein zwischenstellenindividuelles Zusatzsignal mit dem zweiten Eingang jeder zweiten Anpassungsschaltung (38, 49, 56, 67) verbunden ist bzw. daß in jeder Zwischenstelle (II, III) ein Generator (44, 62) für ein zwischenstellenindividuelles Zusatzsignal mit dem zweiten Eingang der zweiten Anpassungsschaltung (38, 56) der Übertragungsrichtung verbunden ist, von der der zweite Übertragungsweg für Zusatzsignale ausgeht, und daß als Übertragungsmedium Lichtwellenleiter (5, 6, 9, 10, 13, 14) vorgesehen sind.

2. Nachrichtenübertragungssystem nach Anspruch 1, dadurch gekennzeichnet, daß für die frequenzmodulierten trägerfrequenten Signale ein oberes Frequenzband und für die Zusatzsignale ein unteres, nicht in der Frequenz moduliertes Frequenzband gewählt ist.

3. Nachrichtenübertragungssystem nach Anspruch 2, dadurch gekennzeichnet, daß das obere Frequenzband im Bereich von 2 bis 20 MHz liegt und daß das untere Frequenzband im Bereich von 0,3 bis ca. 160 kHz liegt.

4. Nachrichtenübertragungssystem nach Anspruch 2 oder 3, dadurch gekennzeichnet, daß im unteren Frequenzband unten wenigstens ein Dienstkanal und oben Ortungsfrequenzen vorgesehen sind.

5. Nachrichtenübertragungssystem · nach Anspruch 4, dadurch gekennzeichnet, daß in den Zwischenstellen (II, III) eine Übertragung der Dienstkanäle in jeder Übertragungsrichtung über den ersten Übertragungsweg und eine Übertragung des Ortungssignals über den zweiten Übertragungsweg vorgesehen ist.

6. Nachrichtenübertragungssystem nach Anspruch 4, dadurch gekennzeichnet, daß dem zweiten Eingang der zweiten Anpassungsschaltung (22, 83) eines Sendeteils (3, 16') dem ein Ortungssignal zugeführt wird, eine erste Gabel (24, 80) oder ein zusammenfassender Verstärker mit je zwei Eingängen vorgeschaltet ist und daß dem einen Eingang der wenigstens eine Dienstkanal und dem anderen Eingang das Ortungssignal zugeführt wird.

7. Nachrichtenübertragungssystem nach Anspruch 4, dadurch gekennzeichnet, daß dem zweiten Ausgang der ersten Anpassungsschaltung (33, 72) im Empfangsteil (4, 15'), dem Ortungssignale entnommen werden, eine zweite Gabel (30, 86) mit nachgeschalteten Filtern (28, 29, 77, 87) oder eine Frequenzweiche oder ein trennender Verstärker mit zwei Ausgängen nachgeschaltet ist, und daß dem einen Ausgang der wenigstens eine Dienstkanal und dem anderen Ausgangssignal die Ortungssignale entnommen werden.

8. Nachrichtenübertragungssystem nach Anspruch 1, dadurch gekennzeichnet, daß der Ausgang des Ortungsfrequenzgenerators (25, 44, 62, 89, 90, 91) über eine Gabel (24, 43, 61, 80, 64, 46) mit dem zweiten Eingang der zweiten Anpassungsschaltung (22, 38, 56, 83, 67, 49) verbunden ist.

9. Nachrichtenübertragungssystem nach Anspruch 1, dadurch gekennzeichnet, daß im ersten und zweiten Übertragungsweg für die Zusatzsignale ein die frequenzmodulierten trägerfrequenten Signale sperrendes Filter (28, 40, 47, 58, 65, 75, 79, 87) vorgesehen ist.

10. Nachrichtenübertragungssystem nach Anspruch 1, dadurch gekennzeichnet, daß in Zwischenstellen (II', III') mit zwei Ortungsfrequenzgeneratoren (44, 91 ; 62, 90) diese durch einen einzigen Ortungsfrequenzgenerator ersetzt werden.

## Claims

1. A communications transmission system for carrier frequency signals and four-wire operation having terminal units (I, IV ; I, IV') which contain a transmitter (3, 16 ; 3, 16') and a receiver (4, 15 ; 4, 15'), with intermediate stations (II, III ; II', III') having amplifiers (7, 11 ; 7', 11') for one transmission direction and amplifiers (8, 12 ; 8', 12') for the other transmission direction and, with a transmitting medium (5, 6, 9, 10, 13, 14) characerised in that each transmitter (3, 16 ; 3, 16') contains a cascade circuit of a frequency modulator (20, 85) for carrier-frequency signals, a limiter (21, 84), a second matching circuit (22, 83) and an electro-optical converter (23, 82), that the second matching circuit (22, 83) is provided with a second input for an additional analogue signal located below the band of the frequency-modulated, carrier-frequency signals, that each receiver (4, 15 ; 4, 15') contains a cascade circuit consisting of an opto-electrical converter (34, 71), a first matching circuit (33, 72), a limiter (32, 73), and a frequency demodulator (31, 74), that the first matching circuit (33, 72) is provided with a second output for the additional signals, which is followed by a filter (28, 29, 75, 77, 87) to block the band of the frequency-modulated, carrier-frequency signals, that in each direction of transmission the intermediate stations (II, III, II', III') the amplifier (7, 8, 11, 12 ; 7', 8', 11', 12') has a cascade circuit consisting of an opto-electrical converter (35, 52, 53, 70), a first matching circuit (36, 51, 54, 69), a limiter (37, 50, 55, 68), a second matching circuit (38, 49, 56, 67) and an electro-optical converter (39, 48, 57, 66), that a first transmission path is provided purely for additional signals, in the intermediate stations (II', III') between the second output of the first matching circuit (36, 51, 54, 69) and the second output of the second matching circuit (38, 49, 56, 67) in both directions of transmission and that a second transmission path is provided purely for additional signals in the intermediate stations (II, III) between the second output of the first matching circuit (36, 54) in the first transmission direction and the second input of the second matching circuit (49, 67) in the second transmission direction, that in each intermediate station (II', III') a generator (44, 62, 90, 91) for an additional signal, individually assigned to each intermediate station, is connected to the second input of each second matching circuit (38, 49, 56, 67) and that in each intermediate station (II, III) a generator (44, 62) for an additional signal, individually assigned to each intermediate station, is connected to the second input of the second matching circuit (38, 56) of that direction of transmission from which the second transmission path for additional signals commences and that optical waveguides (5, 6, 9, 10, 13, 14) are provided as transmitting medium.

2. A communications transmission system as claimed in Claim 1, characterised in that an upper frequency band is selected for the frequency-modulated, carrier-frequency signals and a lower frequency band, not modulated in frequency, is selected for the additional signals.

3. A communications transmission system as claimed in Claim 2, characterised in that the upper frequency band is located in the range from 2 to 20 MHz and the lower frequency band is located in the range from 0.3 to approx. 160 kHz.

4. A communications transmission system as claimed in Claim 2 or 3, characterised in that in the lower frequency band at least one service channel is arranged at the bottom and locating frequencies are arranged at the top.

5. A communications transmission system as claimed in Claim 4, characterised in that in the intermediate stations (II, III) the service channels are transmitted in each direction of transmission via the first transmission path and the locating signal is transmitted via the second transmission path.

6. A communications transmission system as claimed in Claim 4, characterised in that the second input of the second matching circuit (22, 83) of a transmitter (3, 16') supplied with a locating signal is preceded by a first junction (24, 80) or a combining amplifier having two inputs and that the first input is supplied with the minimum of one service channel and the other input is supplied with the locating signal.

7. A communications transmission system as claimed in Claim 4, characterised in that the second output of the first matching circuit (33, 72) in the receiver (4, 15') from which locating signals are obtained, is followed by a second junction (30, 86) connected at its output to filters (28, 29, 77, 87) or a frequency-dividing filter or a separating amplifier having two outputs, and that the minimum of one service channel is taken from the first output and the locating signals are taken from the other output signal.

8. A communications transmission system as claimed in Claim 1, characterised in that the output of the locating frequency generator (25, 44, 62, 89, 90, 91) is connected via a junction (24, 43, 61, 80, 64, 46) to the second input of the second matching circuit (22, 38, 56, 83, 67, 49).

9. A communications transmission system as claimed in Claim 1, characterised in that in the first and second transmission path a filter (28, 40, 47, 58, 65, 75, 79, 87) which blocks the frequency-modulated, carrier-frequency signals is arranged before the additional signals.

10. A communications transmission system as claimed in Claim 1, characterised in that in intermediate stations (II', III') having two locating-frequency generators (44, 91 ; 62, 90), these are replaced by one single locating-frequency generator.

## Revendications

1. Système de transmission d'informations pour des signaux à fréquences porteuses et un fonctionnement à quatre fils, comportant des postes terminaux (I, IV ; I, IV'), qui contiennent une partie émission (3, 16 ; 3, 16') et une partie réception (4, 15 ; 4', 15'), des postes intermédiaires (II, III ; II', III'), qui contiennent un dispositif amplificateur (7, 11 ; 7', 11') pour un sens de transmission et un dispositif amplificateur (8, 12 ; 8', 12') pour l'autre sens de transmission, et un milieu de transmission (5, 6, 9, 10, 13, 14), caractérisé par le fait que dans la partie émission (3, 16 ; 3', 16'), il est prévu un circuit itératif formé par un modulateur de fréquence (20, 85) pour les signaux à fréquences porteuses, par un limiteur (21, 84), par un second circuit d'adaptation (22, 83) et par un convertisseur électro-optique (23, 82), que dans le second circuit d'adaptation (22, 83), il est prévu une seconde entrée pour un signal analogique supplémentaire situé au-dessous de la bande des signaux à fréquences porteuses, modulés en fréquence, que dans la partie réception (4, 15 ; 46, 15'), il est prévu un circuit itératif formé par un convertisseur opto-électrique (34, 71), par un premier circuit d'adaptation (33, 72), par un limiteur (32, 73) et par un modulateur de fréquence (31, 74), que dans le premier circuit d'adaptation (33, 72), il est prévu une seconde sortie pour les signaux supplémentaires, en aval de laquelle est monté un filtre (28, 29, 75, 77, 87) servant à bloquer la bande des signaux à fréquences porteuses modulés en fréquence, que dans les postes intermédiaires, (II, III, II', III') il est prévu, dans chaque sens de transmission, comme dispositif amplificateur (7, 8, 11, 12 ; 7', 8', 11', 12'), un circuit itératif formé par un convertisseur opto-électrique (35, 52, 53, 70), par un premier circuit d'adaptation (36, 51, 54, 69), par un limiteur (37, 50, 55, 68), par un second circuit d'adaptation (38, 49, 56, 67) et par un convertisseur électro-optique (39, 48, 57, 66), que dans les postes intermédiaires (II', III'), il est prévu entre la seconde sortie du premier circuit d'adaptation (36, 51, 54, 69) et la seconde sortie du circuit d'adaptation (38, 49, 56, 67) dans les deux sens de transmission, une première voie de transmission uniquement pour des signaux supplémentaires, ou que dans les postes intermédiaires (II, III), il est prévu, entre la seconde sortie du premier circuit d'adaptation (36, 54) dans le premier sens de transmission et la seconde entrée du second circuit d'adaptation (49, 67) dans le second sens de transmission, une seconde voie de transmission uniquement pour des signaux supplémentaires, que dans chaque poste intermédiaire (II', III'), respectivement un générateur (44, 62, 90, 91) pour un signal supplémentaire prévu individuellement pour chaque poste intermédiaire est relié à la seconde entrée de chaque second circuit d'adaptation (38, 49, 56, 67), ou que dans chaque poste intermédiaire (II, III), un générateur (44, 62) pour un signal supplémentaire prévu individuellement pour chaque poste intermédiaire, est relié à la seconde entrée du second circuit d'adaptation (38, 56) du dispositif de transmission, d'où part la seconde voie de transmission pour des signaux supplémentaires, et que l'on prévoit des guides d'ondes optiques (5, 6, 9, 10, 13, 14) en tant que milieu de transmission.

2. Système de transmission d'informations suivant la revendication 1, caractérisé par le fait que l'on choisit pour les signaux à fréquences porteuses, modulés en fréquence, une bande supérieure de fréquences et pour les signaux supplémentaires, une bande inférieure de fréquences, non modulées en fréquence.

3. Système de transmission d'informations suivant la revendication 2, caractérisé par le fait que la bande supérieure de fréquences se situe dans la plage allant de 2 à 20 MHz et que la bande inférieure de fréquences se situe dans la plage allant de 0,3 à environ 160 kHz.

4. Système de transmission d'informations suivant la revendication 2 ou 3, caractérisé par le fait qu'il est prévu au moins un canal de service en position inférieure dans la bande inférieure des fréquences et des fréquences de localisation, en position supérieure.

5. Système de transmission d'informations suivant la revendication 4, caractérisé par le fait que dans les deux postes intermédiaires (II, III), il est prévu une transmission des canaux de service dans chaque sens de transmission par l'intermédiaire de la première voie de transmission et d'une transmission du signal de localisation par l'intermédiaire de la seconde voie de transmission.

6. Système de transmission d'informations suivant la revendication 4, caractérisé par le fait qu'un premier termineur (24, 80) ou un amplificateur sommateur muni de deux entrées respectives est branché en amont de la seconde entrée du second circuit d'adaptation (22, 83) d'une partie émission (3, 16') à laquelle est envoyé un signal de localisation, et qu'au moins le canal de service est envoyé à une entrée et que le signal de localisation est envoyé à l'autre entrée.

7. Système de transmission d'informations suivant la revendication 4, caractérisé par le fait qu'un second termineur (30, 86) comportant des filtres (28, 29, 77, 87) branchés en aval ou un filtre d'aiguillage ou un amplificateur de séparation comportant deux sorties est branché en aval de la seconde sortie du premier circuit d'adaptation (33, 72) dans la partie réception (4, 15'), dans laquelle des signaux de localisation sont prélevés, et qu'au moins le canal de service est prélevé sur une première sortie et que les signaux de localisation sont prélevés de l'autre signal de sortie.

8. Système de transmission d'informations suivant la revendication 1, caractérisé par le fait que la sortie du générateur (25, 44, 62, 89, 90, 91) des fréquences de localisation est reliée par l'intermédiaire d'un termineur (24, 43, 61, 80, 64, 46) à la seconde entrée du second circuit d'adaptation (22, 38, 56, 83, 67, 49).

9. Système de transmission d'informations suivant la revendication 1, caractérisé par le fait qu'un filtre (28, 40, 47, 58, 65, 75, 79, 87), qui bloque les signaux à fréquences porteuses, modulés en fréquence, est prévu dans la première et dans la seconde voie de transmission pour les signaux supplémentaires.

10. Système de transmission d'informations suivant la revendication 1, caractérisé par le fait que dans des postes intermédiaires (II', III') comportant deux générateurs de fréquences de localisation (44, 91 ; 62, 90), ces derniers sont remplacés par un seul générateur de fréquences de localisation.

# FIG 1

0 084 371

# FIG 2

# FIG 3

FIG 4

0 084 371

4

# FIG 5